# EUROPEAN PATENT APPLICATION

(11) **EP 0 880 255 A2**
(43) Date of publication of application: **25.11.1998**
(21) Application number: 98304009.8
(22) Date of filing: 20.05.1998
(51) Int. Cl.: H04L 29/06

(54) **System and method for remote access to a telephone switching system using internet protocol networks**

(30) Priority: 20.05.1997 CA 2205731
(71) Applicant: NORTHERN TELECOM LIMITED, Montreal, Quebec H2Y 3Y4 (CA)
(72) Inventor: Ward, David, Belleville, Ontario, K8P 4N8 (CA); Marshall, John, Belleville, Ontario, K8P 4H6 (CA); Cheung, Cuthbert, Belleville, Ontario, K3P 4J9 (CA)
(74) Representative: Humphrey-Evans, Edward John

(57) **Abstract**

Disclosed is a communication system for remote access to a telephone switching system, such as a private branch exchange (PBX) switch located at a company's main office, using an Internet Protocol (IP) network, such as the Internet. The system further comprises a voice to IP gateway coupled to the telephone switching system and the IP network, and a computing device, such as a personal computer, capable of connecting to and communicating with the IP network. By communicating through the IP network and the gateway with the telephone switching system, the computing device gains access to functions supported by the switch, thus providing a remote user of the system with a virtual main office desktop environment.

## Description

### FIELD OF THE INVENTION

The present invention relates to a communication system providing remote access to a telephone switching system, in particular to a communication system providing remote access to a telephone switching system through an Internet Protocol network.

### BACKGROUND OF THE INVENTION

An explosive growth and increasing popularity of digital communication networks have changed not only the manner in which information is accessed, exchanged and disseminated, but also the manner in which personal communications are handled. As digital communication networks are capable of transmitting any digital signals complying with the network's protocols, they can also transmit signals traditionally handled by other communication networks, such as telephone signals digitized prior to transmission.

Among various digital communication networks, both private and public, the Internet has become by far the most popular one. Through its open (non-proprietary) communication protocols and architecture, this network has attracted a large number of users. According to some estimates, the number of computers permanently connected to and exchanging data through the Internet is approaching 70 millions and constantly growing. These estimates do not include personal computers of individual users, which computers become connected to the Internet on an occasional basis, usually through Internet Service Providers (ISP), whose computers are permanently connected to the Internet. Through a variety of physical links, from satellite links to residential telephone lines, the Internet has become a truly global phenomenon. With the growing popularity of the Internet, access to this network has become ubiquitous in most parts of the world, both on a contractual (through ISP) and on an occasional basis. For example, a growing number of hotels and business centers throughout the world offer such an access to their customers on "as you go" basis.

The popularity of the Intemet and its protocols resulted in development of private networks using Internet protocols, in particular Transmission Control Protocol/Internet Protocol (TCP/IP) and HyperText Transfer Protocol (HTTP), as their communication standard. These networks, known as intranets, are usually set up by companies, corporations, or other organizations, to facilitate the exchange of information and communication between the members of the organization. They cover a broad spectrum of sizes, from small, in-house (office) networks to networks spanning the globe. The use of IP protocols by intranets facilitates their communication with other IP networks, in particular with the Internet.

From its inception, the Internet supported a number of protocols for communication and exchange of information, such as electronic mail (e-mail), file transfer (ftp), and connection to a remote computer to access directly its resources (telnet), with some other protocols, most notably HTTP, added later on. The popularity of the Internet and ubiquitous access thereto resulted in a growing pressure to use this network as a transmission medium for real time communication services, such as voice mail, videoconferencing, and long distance telephone calls, to mention the most popular ones. To access these, as any other kind of communication services available through the Internet, users connect their personal computer to a local ISP's computer, usually using a modem and a local public switched telephone network (PSTN), to obtain direct connection to the Internet. Once connected to the Internet, they use their personal computer to run software performing the desired function, using the Internet as a communication medium. For Internet telephony, a full duplex voice communication is possible, using a personal computer running appropriate software. As long distance telephony over Internet becomes increasingly popular, and with supporting software offered on a commercial basis, Internet telephony is seen as a potential threat to revenues of major telecom carriers.

Using digital communication networks for both data transmission and communications is known in the prior art. For example, US Pat. No. 5,608,786 discloses a messaging and communication system using digital communication networks, in particular the Internet, as a communication medium. The system, which includes the feature of telephony over digital networks, allows a subscriber to retrieve from a remote location a variety of messages (e-mail, fax, voice, video, etc.) using a personal computer, telephone, or a fax machine. Messages to be retrieved by the subscriber are sent to and stored in subscriber's electronic mailbox located in subscriber's host access node (a commercial access providing computer), using an e-mail address and fax and telephone numbers unique to the subscriber, thus providing him with a virtual office environment. The access nodes, which are distributed throughout the world (and/or throughout a country), are linked and communicate through digital data communication networks, in particular through the Internet. The subscriber always uses a local PSTN to connect to the access node closest to his physical location. If he wants to access from a remote location his electronic mailbox located at his host access node (computer), the locally accessed node (computer) communicates via the Internet with the subscriber's host node, transfers the content of the subscriber's electronic mailbox to the local access node, and from there to the subscriber's personal computer. Real time communications, such as telephone or fax communications, are handled in a similar manner, so that independently of the distance separating the subscriber from his host node only a local phone call is required.

Such a highly centralized system requires an infrastructure of access nodes, which presently does not exist and has to be created. It also ignores the fact that an easy direct access to the Intemet became ubiquitous in many parts of the world, at the cost of a local telephone call. Most importantly, however, the system proposed by US Pat. No. 5,608,786 ignores the fact that many companies and organizations have already provided their employees, usually through private telephone switching systems, such as private branch exchanges (PBX), with personal telephone and facsimile numbers, as well as voice and e-mail boxes. Consequently, instead of creating a centralized virtual office environment proposed by US Pat. No. 5,608,786, it would be preferable to provide a remote access to employee's main office facilities, should the employee find himself in a geographical location remote from the office. The present invention recognizes this need and proposes means to achieve this goal.

Systems for remote access by employee to telephone facilities offered by employee's company, usually at the company's main office, are known in the prior art. However, such systems use an expensive hardware and can be accessed only through telephone networks. This makes their use even more expensive, as a long-distance call is required for the access from geographically remote locations. Additionally, such systems are usually limited to voice communications and cannot provide multiple media streams on a single connection. The present invention proposes a system for remote access to telephone facilities and other resources offered by employee's main office, which system is free of many prior art limitations.

### SUMMARY OF THE INVENTION

The aim of the invention is to provide a virtual main office desktop environment to employees of a company or corporation working at a location remote from the company's main office, such as company's sales forces, business travelers, telecommuters, etc. Independently of his actual geographical location, with a single local telephone call, the employee may obtain full access to communication services offered by his main office, including telephone services, integrated messaging (voice, e-mail, fax), as well as to services supported by an IP network. Telephone services available to the employee will depend mostly on capabilities of the telephone switching system operated by the company and may include incoming and outgoing calls, voice mail access, call transfer, conference call, directory access, call logging, visual message waiting, calling line ID, etc. Services supported by an IP network will be available if the company owns or subscribes to an intranet, and may include access to a Web browser, file transfer, access to company's databases, etc. In other words, the main office communication, messaging, and IP network supported services available to the employee at a geographically remote location are the same as those offered to the employee working at his desk in the main office.

According to one aspect, the invention provides a communication system comprising an Internet Protocol (IP) network, a telephone switching system, a gateway coupled to the telephone switching system and the network, for receiving and transmitting signals between the telephone switching system and the IP network, and a computing device capable of connecting to and communicating with the IP network. After connecting to the IP network, the computing device communicates trough the gateway with the telephone switching system of the main office, to obtain remote access to telephone communication functions and other resources supported by the telephone switching system and the IP network.

According to another aspect, the invention provides a method of providing remote access to a telephone switching system through an Internet Protocol (IP) network, which method comprises the steps of: providing a gateway coupled to the telephone switching system and the IP network, the gateway being capable of receiving and transmitting signals between the telephone switching system and the IP network; providing a computing device capable of connecting to and communicating with the IP network; connecting the computing device to the IP network; and using the computing device to communicate with the telephone switching system through the IP network and the gateway, to obtain access to functions supported by the switching system.

According to yet another aspect, the invention provides a method of providing a virtual main office desktop environment for a remote user of a main office resources, which method comprises the steps of: providing a gateway coupled to a telephone switching system of the main office and to an Internet Protocol (IP) network, the gateway being capable of receiving and transmitting signals between the telephone switching system and the IP network; providing the remote user with a computing device capable of connecting to and communicating with the IP network; connecting the computing device to the IP network at an arbitrary location remote from the main office; communicating with the main office telephone switching system through the IP network and the gateway, to obtain remote access to functions and resources supported by the main office telephone switching system and the IP network, thus creating the virtual main office desktop environment for the remote user.

To communicate through the IP network and the gateway with the telephone switching system and to take advantage of various functions and resources supported by the telephone switching system and the IP network, a suitable client software installed on the computing device, usually a personal computer, is required. Running the client software during a communication session provides an easy, usually point-and-click access to all functions of the accessed telephone switching system. For handling voice communication functions, the computer has to be equipped with a suitable audio processor and audio transducer.

### BRIEF DESCRIPTION OF THE DRAWINGS

FIG. 1 is a block diagram of a general embodiment of the communication system of the invention;
FIG. 2 is a block diagram of the communication system of FIG. 1 according to one preferred embodiment;
FIG. 3 is a block diagram of the communication system of FIG. 1 according to another preferred embodiment;
FIG. 4 is a block diagram of a general embodiment of a voice to Intemet Protocol gateway;
FIG. 5 is a block diagram of the gateway of FIG. 4 according to one preferred embodiment.

### DETAILED DESCRIPTION OF THE PREFERRED EMBODIMENTS

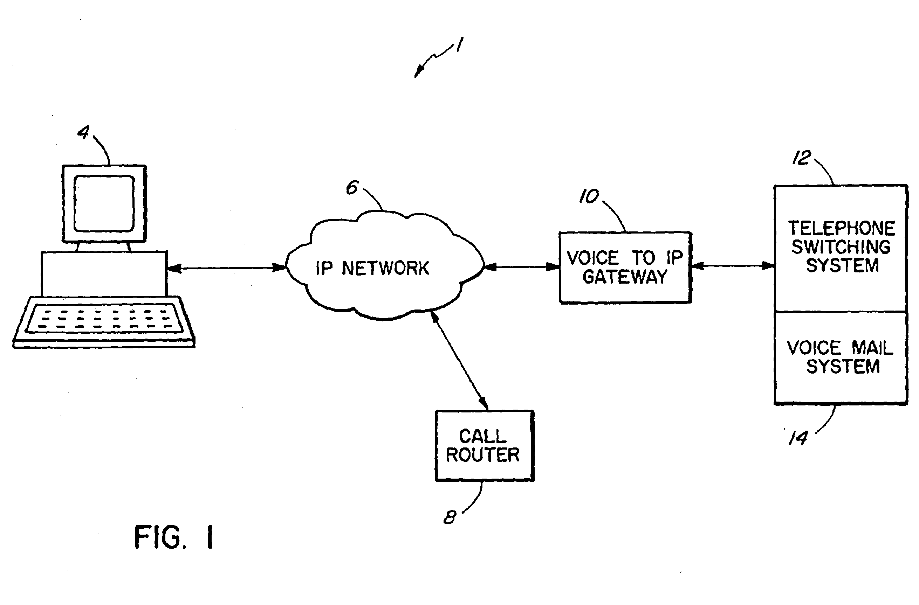

Referring to FIG 1, the communication system 1 of the invention comprises a computing device 4, such as a personal computer, located at a point remote from a telephone switching system 12, such as a private branch exchange (PBX) located at a company's main office. The switching system 12 may further include a voice mail system 14. The computing device 4, which is capable of connecting to and communicating with an Internet Protocol (IP) network 6, such as the Internet or an intranet, uses the network for communication with the telephone switching system 12, through a voice to Internet Protocol (IP) gateway 10.

To obtain access to functions offered by the telephone switching system 12, a remote user connects the computing device 4 to the IP network 6. Once connection with the IP network 6 is established, an access request is sent from the computing device 4 through the IP network 6 to the telephone switching system 12. A call router 8 handles the access request and the call is normally directed to a free port of the gateway 10, and through the gateway 10 to the telephone switching system 12. Once connection with the telephone switching system 12 is established, the user may access available functions of the switching system 12, such as incoming and outgoing calls, facsimile transmission, voice mail access, call transfer, conference call, directory access, call logging, visual message waiting, calling line ID, etc. This access to functions supported by the switching system 12 is in all respects identical with that offered to the main office workers, except for the fact that a computing device 4 is used for gaining the access and handling the resulting communications.

The IP network 6 used by a remote user for accessing the main office resources, means of connecting to the network, and topology of connection may vary, depending on user's particular location. As a general rule, the connection to the network takes place always through an access point closest to the user's geographical location, usually at no or a modest cost. In many cases, the Internet is the IP network of choice, as a public IP network ubiquitous in most parts of the world. If the access point to the Internet is a local ISP, the connection is normally a dial-up connection through the local PSTN using a modem. However, if a direct connection to the Internet is available at a particular location, it can also be used for connecting to the Internet. Through the Internet, the user may connect directly to the gateway 10 and, through the gateway, to the company's telephone switching system 12. If the company owns or subscribes to a private IP network (an intranet) and no dial-up or direct access to the intranet exist at the user's geographical location, the Internet may be used to secure connection to the intranet and, via the intranet, to the gateway 10 and the telephone switching system 12. If a dial-up connection to the intranet is available through a local PSTN, the user may connect to the intranet using his computer and a modem. If the user is located at a place, such as company's branch office, where his computer may be connected directly to the intranet, he may use this connection to gain access to the gateway 10 and the company's main office telephone switching system 12. Connecting to the company's intranet provides the user with access to all resources of the intranet, in addition to access to the gateway 10 and, through the gateway, to the company's telephone switching system 12 and its functions. Connecting directly to the gateway 10 through an IP network other than the intranet, such as the Intemet, provides the user only with access to functions supported by the telephone switching system 12.

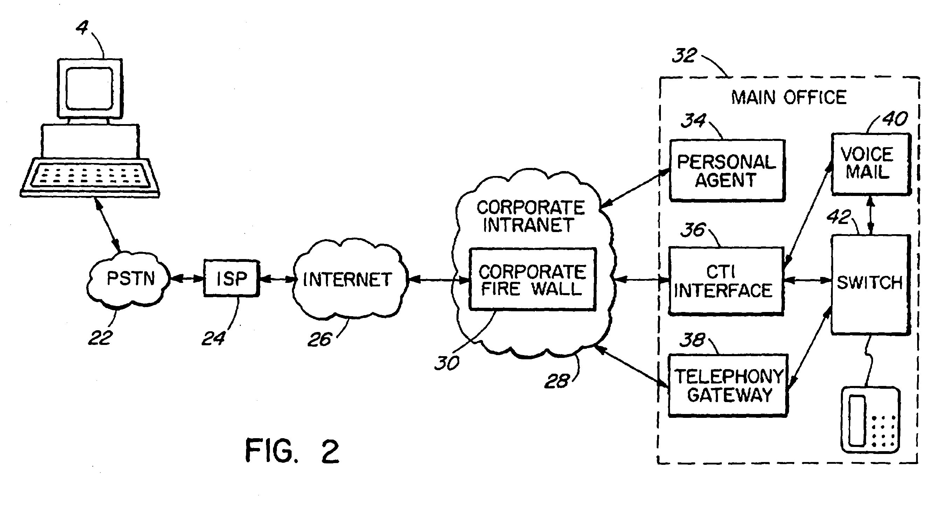

FIG. 2 shows a connection topology of the communication system of the invention according to one preferred embodiment. This topology is preferred for locations of a remote user where only a dial-up connection to the Internet is available. According to this embodiment, the communication system 2 comprises a computing device 4 located at a geographical location remote from a main office 32, which computing device 4 is connected to and communicates with the Internet 26. The connection to the Internet is established as a dial-up connection to a local ISP 24, through a local PSTN 22, using a modem (not shown in the drawing) coupled to the computing device 4. The Internet 26 is used to ensure communication between the computing device 4 and a corporate intranet 28. This communication takes place through a corporate firewall 30, to prevent any unauthorized access to the intranet. Once connected to the corporate intranet 28, the user of the computing device 4 gains access to the intranet's resources, such as his e-mail box, a Web browser, access to company's databases, file transfer and exchange, etc. Through the intranet 28, he also obtains access to other main office resources known to those skilled in the art, such as a Personal Agent 34, a Computer Telephone Interface (CTI) 36 and, in particular, to a telephone switching system 42, including a voice mail system 40. Access to the switching system 42 is possible through a telephony gateway 38, which is a voice to IP gateway. Once connected to the gateway 38, and, through the gateway 38 to the telephone switching system 42, the user may use the computing device 4 to access all the functions supported by the telephone switching system 42. By accessing the voice mail system 40, he can retrieve and register voice messages. By accessing his Personal Agent 34, he can register or update information left with the Agent, such as his travel schedules. The CTI interface 36 may allow more sophisticated control of the telephone switching system and may provide the user with useful information about persons and places being called.

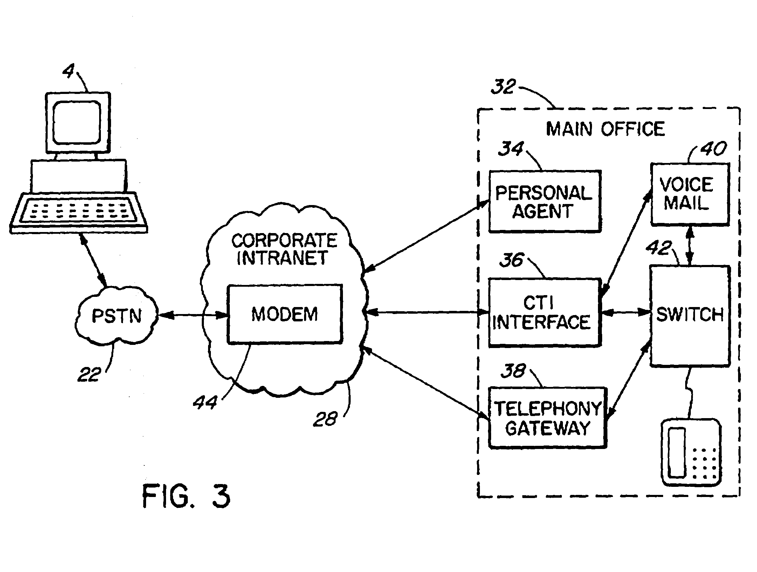

FIG. 3 shows another example of connection topology of the communication system according to the invention. This topology is preferred for locations of a remote user where a dial-up, but not direct connection to the company's intranet is available. This topology does not necessarily imply a geographical location close to the main office 32, as some intranets may span considerable distances. In this case, the connection with the corporate intranet 28 is established by a computing device 4 equipped with a modem (not shown in the drawing) through the local PSTN 22 and a modem 44, the latter being part of the corporate intranet 28. As for the connection topology shown in FIG. 2, also this connection topology provides the user with access to resources of both the corporate intranet 28 and the main office 32.

It should be stressed that as a result of using an IP network for communication with the main office, all accessible resources of the main office become available to the user not only on a single connection, but also at the same time. In other words, multiple media streams become available to the user of the system on a single connection. As a result, the user is not limited to choosing one function or application at a time, but may access several functions and applications at the same time, for example he may search a database when listening to voice messages left in his voice mail box and reviewing messages left in his e-mail box.

A computing device preferred for use with the communication system of the invention is a personal computer (PC), either a desktop or a laptop PC. Mobile users usually prefer the latter for its enhanced portability. However, other computing devices capable of running suitable client software, such as an intelligent telephone, may also be used in the system of the invention. An intelligent telephone may be sometimes preferred for its native ability of handling voice communications, but may not be adequate for other functions and applications which may be available to the user, for example those involving graphics, whereas a personal computer is normally able to emulate all the functions of an intelligent telephone by running suitable software. On the other hand, for handling voice communications, the personal computer has to be equipped with an audio signal processor, such as a sound card, and an audio transducer, such as a microphone and speakers or a headset. For microphone and speakers, to handle full duplex voice communications, an audio processor with echo cancellation capability is normally required. The greater complexity of the audio processor necessary for microphone and speakers usually makes the headset a preferred audio transducer for full duplex voice communications.

For a dial-up connection to the IP network, the computing device has to be equipped with a modem, either internal or external. To maintain an adequate speed of data transfer, a high speed modem (28.8 Kbps or better) is preferred. It should be noted that in some cases the speed of data transfer may be limited by factors independent of the user's modem, such as the speed of connection to the local ISP.

To communicate with the voice to IP gateway and to remotely access various functions and resources of the telephone switching system and the IP network, a suitable client software must be installed and running on the computing device. This software should not only support the required functionality to the computing device, such as its ability of handling voice communications, but also provides an easy, for example a point-and-click access to available functions and resources of the accessed intranet and telephone switching system. This software may be a proprietary software, for example bundled with the voice to IP gateway, or can be purchased from a third party.

The voice to IP gateway is an important part of the communication system according to the invention. Being coupled to both the IP network and the telephone switching system, the gateway makes possible communications between these two parts of the communication system, which operate according to different standards and protocols. In essence, the gateway acts as an interpreter between the IP network and the telephone switching system, by receiving signals from both and converting them, prior to transmission, to standards and protocols of the part of the system to which the received signals will be transmitted.

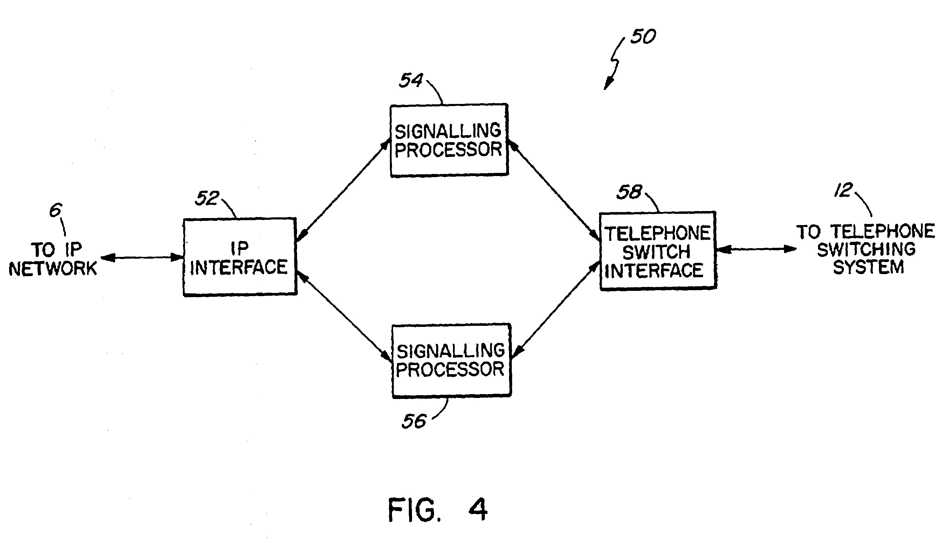

Referring to FIG. 4 which shows a block diagram of a general embodiment of the gateway, a voice to IP gateway 50 comprises an IP interface 52, which receives signals from and transmits signals to an IP network 6. Signals received from the IP network 6 are decoded by the IP interface 52 and, depending on their nature, forwarded either to an audio processor 54 or to a signalling processor 56. These two components of the gateway 50 perform further processing of the signals received from the IP interface 52, such as decompression of compressed digitized voice signals, silence regeneration, and echo cancelling, before forwarding the signals to a telephone switch interface 58. The telephone switch interface 58 adapts the signals received from processors 54 and 56 to telephony standards and protocols, before sending them to a telephone switching system 12. These processing operations are reversed for signals flowing from the telephone switching system 12 to the IP network 6.

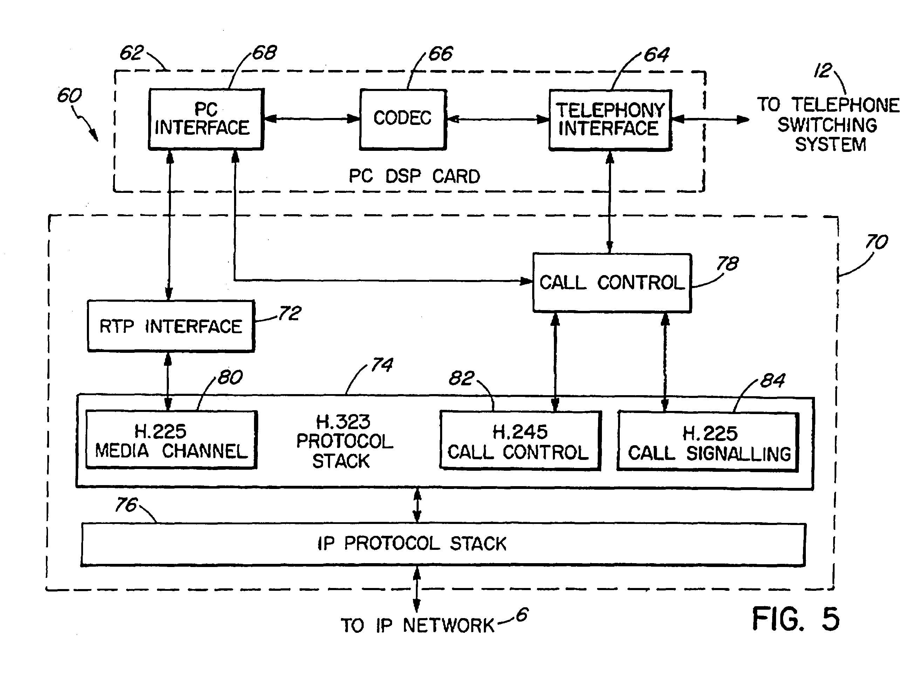

FIG. 5 shows an implementation of the voice to IP gateway of FIG. 4, which implementation of the gateway may be used in the communication system of the invention. The gateway 60 consists of two parts, identified by reference numbers 62 and 70, respectively. The first part of the gateway 60, a PC Digital Signal Processing (PC DSP) card 62, consists of a telephony interface 64, a coder-decoder (Codec) 66, and a PC interface 68. The telephony interface 64 and the coder-decoder 66 of the PC DSP card 62 perform functions of the telephone switch interface 58 and the audio and signalling processors 54 and 56, respectively, of the general embodiment of the voice to IP gateway shown in FIG. 4. Through the PC interface 68, the PC DSP card 62 communicates with its host computer and the second part 70 of the gateway. The PC DSP card 62 is implemented mostly in hardware, as a plug-in card for a personal computer, said computer also running software components of the card.

The second part 70 of the gateway 60 is implemented in software that is normally installed on the same personal computer as the PC DSP card 62 and its software components. This part of the gateway performs functions of the IP interface 52 of the general embodiment of the voice to IP gateway shown in FIG. 4. The main components of this part of the gateway are a real time processing (RTP) interface 72, a H.323 protocol stack 74, comprising a H.225 media channel module 80, a H.245 call control module 82, and a H.225 call signalling module 84, an Internet Protocol stack 76, and a call controller 78, the latter performing functions of the signalling processor 56 of FIG. 4. This part of the gateway adapts real time signals received from the PC DSP card 62 to Internet Protocol standards, before sending them to the IP network 6. In the opposite direction, it converts signals received from the IP network 6 into real time signals and forwards them to the PC DSP card 62 for further processing.

Voice to Internet Protocol gateways identical with or similar to the gateway represented in FIG. 5 are commercially available from various manufacturers and can usually cooperate with any IP network, including the Internet and intranets, and with any telephone switching system, including private branch exchanges (PBX), Key, and Centrex switches.

Although various preferred embodiments of the present invention have been described herein, it will be appreciated by those skilled in the art that variations may be made thereto without departing from the spirit and scope of the invention, as defined in the appended claims.

In particular, in the present context, the term "IP Network" is intended to encompass both networks employing the Internet Protocol proper, and networks using alternative packet-switched protocols having similar delivery characteristics. Similarly, the term "the Internet" is intended to encompass any and all such public IP Networks, whilst the term "an intranet" encompasses any and all such private IP Networks.

## Claims

1. A communication system comprising:
- an Internet Protocol (IP) network;
- a telephone switching system;
- a gateway coupled to the telephone switching system and the IP network, for receiving and transmitting signals between the telephone switching system and the IP network;
- a computing device capable of connecting to and communicating with the IP network.

2. A communication system according to claim 1, wherein the computing device communicates with the telephone switching system through the IP network and the gateway, to obtain access to functions supported by the switching system.

3. A communication system according to any of claims 1-2, wherein the IP network is either the Internet or an intranet.

4. A communication system according to any of claims 1-3, wherein the computing device connects to the IP network either through a local public switched telephone network (PSTN), or through a local Internet Service provider (ISP), or a combination thereof.

5. A communication system according to any of claims 1-2, wherein the IP network is an intranet and wherein the computing device either connects to the intranet through the Internet, or connects to the intranet through a local public switched telephone network (PSTN), or a combination thereof, or connects directly to the intranet.

6. A communication system according to any of claims 1-5, wherein the gateway is a voice to Internet Protocol (IP) gateway.

7. A communication system according to any of claims 1-6, wherein the telephone switching system is either a private branch exchange (PBX) switch or is a Centrex switch.

8. A communication system according to any of claims 1-7, wherein the computing device is either a personal computer or an intelligent telephone.

9. A communication system according to any of claims 1-8, wherein the computing device further comprises an audio signal processor and an audio transducer.

10. A communication system according to claim 9, wherein the audio signal processor is a sound card and the audio transducer is a headset.

11. A communication system according to claim 9, wherein the audio signal processor has echo cancellation capability and the audio transducer is a microphone and speakers.

12. A method of providing remote access to a telephone switching system through an Internet Protocol (IP) network, said method comprising the steps of:
- providing a gateway coupled to the telephone switching system and the IP network, for receiving and transmitting signals between the telephone switching system and the IP network;
- providing a computing device capable of connecting to and communicating with the IP network;
- connecting the computing device to the IP network;
- using the computing device to communicate with the telephone switching system through the IP network and the gateway, to obtain access to functions supported by the switching system.

13. A method of providing a virtual main office desktop environment for a remote user of a main office resources, said method comprising the steps of:
- providing a gateway coupled to a telephone switching system of the main office and to an Internet Protocol (IP) network, for receiving and transmitting signals between the telephone switching system and the IP network;
- providing the remote user with a computing device capable of connecting to and communicating with the IP network;
- connecting the computing device to the IP network at an arbitrary location geographically remote from the main office;
- communicating with the telephone switching system of the main office through the IP network and the gateway, to obtain remote access to functions supported by the telephone switching system and to other main office resources, thus creating the virtual main office desktop environment for the remote user.

14. A method according to any of claims 12-13, wherein the IP network is either the Internet or an intranet.

15. A method according to any of claims 12-14, wherein the gateway is a voice to Internet Protocol (IP) network.

16. A method according to any of claims 12-15, wherein the computing device is a personal computer.

17. A method according to any of claims 12-16, wherein the computing device further comprises an audio signal processor and an audio transducer.
